# EUROPÄISCHE PATENTANMELDUNG

(11) **EP 4 725 655 A1**
(43) Veröffentlichungstag der Anmeldung: **15.04.2026**
(21) Anmeldenummer: 24206366.7
(22) Anmeldetag: 14.10.2024
(51) Int. Cl.: B25J 9/16, G05B 19/4099

(54) **VERFAHREN ZUR BEARBEITUNG EINES WERKSTÜCKS MITTELS EINES ROBOTERS**

(71) Anmelder: 3D.aero GmbH, 20539 Hamburg (DE)
(72) Erfinder: BAHR, Sönke, 64297 Darmstadt (DE); ERNST, Michael, 23867 Sülfeld (DE); HARNISCH, Martin, 25482 Appen (DE)
(74) Vertreter: Raffay & Fleck

(57) **Zusammenfassung**

Die Erfindung betrifft ein Verfahren zur Bearbeitung von Werkstücken, insbesondere durch Lackieren, mittels eines Roboters. Dabei soll die Wegplanung des Roboters vereinfach werden oder ganz automatisch erfolgen.

Aus dem Stand der Technik sind verschiedene Verfahren zur Klassifikation von Objekten und zur Überprüfung von automatischen Planungsverfahren bekannt, so insbesondere Pointnet, Pointnet + + bzw. Paintnet.

Aus dem Stand der Technik ist es ebenfalls bekannt, Bahnabschnitte zu bestimmen, die für die Bearbeitung erforderlich sind und diese dann miteinander zu einem Roboterpfad zu verbinden.

Die vorliegende Anmeldung verfolgt mehrere einzeln und gemeinsam mit besonderem Vorteil nutzbar Erfindungen. So kann nicht nur durch eine besonders angepasste Übertragung einer an mindestens einem Musterwerkstück entwickelte Lackierstrategie auf eine Vielzahl von formgleichen Werkstücken übertragen werden, ohne dass diese exakt gleich positioniert werden müssen, sondern können auch Abweichung in der Montage von einzelnen Werkstückabschnitten ausgeglichen werden.

## Beschreibung

Die Erfindung betrifft ein Verfahren zur Bearbeitung von Werkstücken, insbesondere durch Lackieren, mittels eines Roboters. Dabei soll die Wegplanung des Roboters vereinfacht werden oder ganz automatisch erfolgen.

Aus dem Stand der Technik sind verschiedene Verfahren zur Klassifikation von Objekten und zur Überprüfung von automatischen Planungsverfahren bekannt, so insbesondere Pointnet ("PointNet: Deep Learning on Point Sets for 3D Classification and Segmentation" Charles R. Qi et al., arXiv: 1612.00593v2, 10 Apr 2017), Pointnet + + ("PointNet + +: Deep Hierarchical Feature Learning on Point Sets in a Metric Space" Charles R. Qi et al. arXiv:1706.02413v1, 7 Jun 2017) bzw. Paintnet ("PaintNet: Unstructured Multi-Path Learning from 3D Point Clouds for Robotic Spray Painting", Gabriele Tiboni et al., arXiv:2211.06930v3, 6 Dec 2023, im Folgenden Tiboni).

Aus dem Stand der Technik ist es ebenfalls bekannt, Bahnabschnitte zu bestimmen, die für die Bearbeitung erforderlich sind und diese dann miteinander zu einem Roboterpfad zu verbinden, so zum Beispiel aus "Generating Optimized Trajectories for Robotic Spray Painting", Daniel Gleeson, 1380 IEEE TRANSACTIONS ON AUTOMATION SCIENCE AND ENGINEERING, VOL. 19, NO. 3, JULY 2022, im Folgenden Gleeson.

Die vorliegende Anmeldung verfolgt mehrere einzeln und gemeinsam mit besonderem Vorteil nutzbar Erfindungen. So kann nicht nur durch eine besonders angepasste Übertragung einer an mindestens einem Musterwerkstück entwickelte Lackierstrategie auf eine Vielzahl von formgleichen, gegebenenfalls in der Größe skalierter, Werkstücken oder Werkstückabschnitte übertragen werden, ohne dass diese exakt gleich positioniert werden müssen, sondern können auch Abweichung in der Montage von einzelnen Werkstückabschnitten ausgeglichen werden.

Auch können die Bahnabschnitte und/oder der Roboterpfad automatisch geplant werden und/oder geplante Bahnabschnitte und/oder Teile eines Roboterpfads effizient durch manuelle Planung eines Abschnitts verbessert und/oder ergänzt werden.

Durch die eine Klassifikation, die flächige und kubische Körper unterscheidet und die Behandlung auch von räumlichen Körpern als Einheit und nicht nur getrennt von einzelnen Flächen, ist es im Gegensatz zum Stand der Technik, wie beispielsweise Tiboni, möglich, Bahnabschnitte auch über mehrere Flächen gemeinsam zu planen, was zu deutlich besseren Lackierergebnissen und/oder Taktzeiteinsparungen führen kann.

Gelöst wird die Aufgabe durch ein Verfahren zur Bearbeitung, insbesondere Lackieren, mindestens eines Werkstücks, insbesondere einer Mehrzahl formgleicher Werkstücke,

wobei in einem ersten Schritt mittels eines digitalen Modells der oder eines ersten Scans des mindestens einen Werkstücke ein Roboterpfad erstellt wird, wobei dies insbesondere derart erfolgt, dass das Werkstück oder ein erstes der Mehrzahl der Werkstücke mittels mindestens einer Auflage und/oder Aufnahme positioniert wird und mittels eines 3D-Scanners eine Punktewolke einer Außenkontur des ersten Werkstücks erstellt wird, wobei eine konvexe und/oder konkave Hülle der Punktewolke ermittelt wird und wobei insbesondere unter Verwendung der Hülle mindestens ein Roboterpfad erstellt wird.

Insbesondere wird in einem zweiten Schritt ein, insbesondere zweites, Werkstück der Mehrzahl der Werkstücke mittels mindestens einer Auflage und/oder Aufnahme positioniert wird und mittels eines oder des 3D-Scanners eine Punktewolke einer Außenkontur des zweiten Werkstücks erstellt.

Insbesondere wird die Lage und Orientierung des digitalen Modells, insbesondere die Punktewolken des mindestens einen oder ersten Werkstücks und die Punktewolke des, insbesondere zweiten, Werkstücks verglichen, um einen translativen und/oder rotativen Lageunterschied des Werkstücks und/oder mindestens einer, insbesondere aller, seiner Oberflächen, Werkstück- und/oder Oberflächenabschnitte zu ermitteln und der Roboterpfad um den Lageunterschied transformiert wird, wobei dies insbesondere für die Oberflächen, Werkstück- und/oder Oberflächenabschnitte gesondert erfolgt.

Insbesondere wird mittels mindestens eines Roboters zur Bearbeitung des zweiten Werkstücks der transformierte Roboterpfad, gegebenenfalls nach weiterer Optimierung, wie beispielsweise aus Gleeson bekannt, abgefahren und insbesondere das mindestens eine oder eins oder die Mehrzahl der Werkstücke bearbeitet, insbesondere lackiert.

Bevorzugt wird der der zweite Schritt mit weiteren, insbesondere der Mehrzahl der, Werkstücken der Mehrzahl wiederholt.

Gelöst wird die Aufgabe auch durch ein Verfahren zur Bearbeitung, insbesondere Lackieren, mindestens eines Werkstücks, insbesondere nach vorstehendem Verfahren, wobei das Werkstück und/oder mindestens ein Werkstück- und/oder Oberflächenabschnitt, insbesondere im ersten Schritt, mittels neuronalem Netz, insbesondere unter Verwendung von PointNet und/oder PointNet+ +, insbesondere punktbasiert, klassifiziert, insbesondere semantisch segmentiert, wird und anhand der Klassifikation eine vorbestimmte Lackierstrategie pro Oberfläche, Werkstück- und/oder Oberflächenabschnitt gewählt und zur Erzeugung der Roboterbahn, insbesondere von Bahnabschnitten zur Erzeugung der Roboterbahn, verwendet wird.

Mit Vorteil unterscheidet die Klassifikation zumindest zwischen einerseits flächigen Körpern und Volumenkörpern und andererseits zwischen geschlossen oder solchen mit Aussparungen, insbesondere unterscheidet zwischen geschlossenen Flächen, Flächen mit Aussparungen, kubischen, zylindrischen, regalförmigen Körpern und/oder Fachwerkkörpern, wobei insbesondere eine Konsolidierung der punktbasierten Klassifikation derart erfolgt, dass insbesondere mittels Segmentierung, insbesondere regionbasiert und/oder mittels clustering, Oberflächen, Werkstück- und/oder Oberflächenabschnitte mit einer Mindestgröße des Bearbeitungsradius der gleichzeitigen Bearbeitung des Roboters, beispielsweise Sprühradius und/oder Schleifradius, erfolgt.

Durch die Unterscheidung von flächigen und kubischen Körpern und Behandlung auch von räumlichen Körpern und nicht nur einzelnen Flächen, ist es im Gegensatz zum Stand der Technik, wie beispielsweise Tiboni, möglich, Bahnabschnitte auch über mehrere Flächen gemeinsam zu planen, was zu deutlich besseren Lackierergebnissen und/oder Taktzeiteinsparungen führen kann.

Die Unterteilung des Werkstücks in Oberflächen, Werkstück- und/oder Oberflächenabschnitte kann beispielsweise durch eine Benutzereingabe, durch Konstruktionsdaten des Werkstücks, durch Klassifikation, Kanten des Werkstücks und/oder semantische Segmentierung gegeben sein bzw. ermittelt werden.

Mit Vorteil wird die Hülle mittels Delaunay Triangulation und/oder mittels 3d Alpha Wrapping ermittelt. Dadurch lässt sich zuverlässig eine Hülle ermitteln.

In der praktischen Anwendung kann das Werkstück insbesondere an mindestens, insbesondere genau, zwei Punkten, Orten und/oder Aufhängungen des Werkstücks festgelegt werden. Es kann vorteilhafterweise, insbesondere durch die zwei Punkte verlaufend eine Mittelebene bestimmt werden, die das Werkstück in zwei Teile, insbesondere näherungsweis ein Bezug auf die Oberfläche Hälften, aufteilt. Dann können die zwei Teile durch zwei Roboter bearbeitet werden und kann das Verfahren insbesondere für jedes der Teile angewandt werden. Dadurch lässt sich nicht nur die Taktzeit, die für die Bearbeitung des Werkstücks notwendig ist, beschleunigen, in der Regel mehr als halbieren, sondern auch die Zugänglichkeit zur Bearbeitung verbessern, was zu einer Reduzierung der Taktzeit beitragen kann. Diese Mittelebene kann auch zur Analyse verwendet werden, indem die Hülle senkrecht zur Mittelebene auf die Mitteleben projiziert wird und diese projizierte Hülle anstelle der oder ergänzend zu der Hülle verwendet wird.

Mit besonderem Vorteil wird die Roboterbahn als Bahnabschnitte, die miteinander verbunden werden, erzeugt, wobei die Bahnabschnitte als in zwei Raumrichtungen gerade Linien und/oder in einer Ebene, insbesondere gemittelt und/oder näherungsweise und/oder vollständig senkrecht auf der Hülle und/oder Pfadhülle, auf einer Pfadhülle um die Hülle des Werkstücks und/oder das Werkstück und/oder mit vorbestimmtem und/oder konstantem Abstand von der Hülle und/oder des Werkstücks, insbesondere je zu der jeweils zu planenden Oberfläche, Oberflächen- und/oder Werkstückabschnitt, gelegt werden. Dies kann beispielsweise durch Ablegen und/oder Abbiegen von parallelen Strahlen und Verwendung nur von Teilen der Strahlen, die auf der Pfadhülle zu liegen kommen, als Bahnabschnitte, erfolgen. Dabei ist der Abstand der Pfadhülle von der Hülle/dem Werkstück und/oder der Abstand der Strahlen voneinander insbesondere vorbestimmt, abhängig von Benutzereingaben und/oder von der Lackiertrategie. Es kann auch vorteilhaft sein, insbesondere für eine gleichmäßigere Bearbeitung und/oder Bewegung und/oder zur Reduzierung der Taktzeit, Mittelungen vorzunehmen, sodass beispielsweise die Oberfläche der Hülle und/oder Pfadhülle in Bereichen, insbesondere jeweils einer Oberfläche, Oberflächen- und/oder Werkstückabschnitt, gemittelt wird und/oder der Abstand nur im Mittel gewahrt ist.

Das Ablegen kann auch mittels Raytracing erfolgen, bei dem man ausgehend von dem Strahl oder einer Linie, die insbesondere bei runden Oberflächen und/oder zylindrischen Mantelfächen auch eine Kreisbogen(abschnitt) sein kann, Projektionsstrahlen auf das Werkstück, die Hülle und/oder Pfadhülle schießt, wobei die Projektionsstrahlen zueinander parallel sind und/oder auf einen gemeinsamen Punkt gerichtet sind. Dann werden vorteilhafterweise die Schnittpunkte der Projektionsstrahlen mit der Pfadhülle bestimmt und durch diese der jeweilige Bahnabschnitt bestimmt.

Insbesondere kann das Ablegen/Abbiegen in Richtung der, insbesondere gemittelten, Normalen auf der, insbesondere gemittelten Oberfläche, des Oberflächen- und/oder Werkstückabschnitts, der zugehörigen Hülle und/oder Pfadhülle erfolgen. Dadurch kann eine gleichmäßige Verteilung der Bahnabschnitte erreicht werden.

Die Orientierung einer Werkzeugachse eines Werkzeuges des Roboters, wie eine gemittelte Sprührichtung einer Sprühpistole kann beispielswiese in Richtung der, insbesondere gemittelten und/oder lokal an der Hauptachse des Sprühens vorhandenen, Abbiegerichtung und/oder senkrecht auf die jeweilig besprühte Fläche des Werkstücks, der Hülle und/oder Pfadhülle orientiert sein. Auch eine weitere Optimierung, wie beispielsweise aus Gleeson bekannt, wäre denkbar.

Mit Vorteil wird der Roboterpfad durch Verbinden einer Vielzahl von Bahnabschnitten erstellt. Dadurch lässt sich eine zusammenhängende Bewegungsbahn als Roboterpfad gewinnen, der auch noch weiter optimiert werden kann, wie beispielsweise aus Gleeson bekannt.

Verfahren nach einem der vorstehenden Ansprüche, wobei die Auswahl einer Strahlquelle, der Strahlenrichtung und/oder des Strahlenabstand oder der Strategie zur Erzeugung von Bahnabschnitten abhängig ist von einer gewählten Lackierstrategie und/oder vorbestimmt ist und/oder durch Benutzereingabe bestimmt wird. Die Strahlquelle bestimmt insbesondere den Ort der Quelle.

Insbesondere erfolgt die Bestimmung des Roboterpfades und/oder die Klassifikation und/oder die Durchführung des Verfahrens mittels einer Datenverarbeitungseinrichtung, insbesondere aufweisend CPU, Speicher, Schnittstelle zur Roboteransteuerung und/oder Ausgabe des, gegebenenfalls weiter, wie beispielsweise aus Gleeson bekannt, optimierten, Roboterpfades.

Mit Vorteil ist das neuronale Netz ein solches, das unter Verwendung von gelabelten Daten trainiert wurde und/oder
wobei das neuronale Netz an gelabelten Daten trainiert wird, wobei die Unterscheidung zwischen flächiger Körper oder Volumenkörper zum Labeln der Daten anhand einer vorbestimmten Grenze des Volumen/Flächen- und/oder ein Volumen/Volumen-Verhältnis erfolgt, wobei das zu betrachtende (erste) Volumen insbesondere das des Werkstücks und/oder Körper und/oder Werkstückabschnitts ist und die Fläche insbesondere die Oberfläche des Werkstücks, der Hülle und/oder des Körper und/oder Werkstückabschnitt, insbesondere projiziert auf eine Ebene, insbesondere Mittelebene, und/oder eine, insbesondere übliche, Bearbeitungsfläche und/oder quadrierte Beabreitungsbreite eines/des Roboters/Werkzeugs jeweils zu einem Zeitpunkt ist und/wobei des zweite Volumen im (erstes)Volumen/(zweites)Volumen-Verhältnis insbesondere bestimmt wird durch die Multiplikation einer Fläche und einer Breite, wobei diese Fläche insbesondere die Oberfläche des Werkstücks, der Hülle und/oder des Körper und/oder Werkstückabschnitt, insbesondere projiziert auf eine Ebene, insbesondere Mittelebene und die Breite insbesondere eine Bearbeitungsbreite eines/des Roboters/Werkzeugs jeweils zu einem Zeitpunkt. Bevorzugt wird eine vorbestimmte Grenze bei 25 bis 50% des Verhältnisses von Volumen des Werkstücks und/oder Werkstückabschnitts zum Produkt aus Bearbeitungsbreite, insbesondere Sprühbreite, und auf eine Ebene, insbesondere Mittelebene projizierte Hülle, wobei unterhalb der Grenze vorteilhafterweise ein flächiger Körper angenommen wird.

Mit Vorteil erfolgt die Unterscheidung zwischen kubisch und zylindrisch anhand eines vorbestimmten Wertes für die akkumulierte Differenz vom mittleren Radius zum realen Radius im Verhältnis zum Radius, wobei der Radius ein solcher um die Hauptachse ist und/oder mittels des mittleren Radius der Hülle und einer Schnittebene durch die Hülle senkrecht zur Hauptachse der Hülle bestimmt, in der die Flächennormalen der Hülle im Mittel um mehr als einen vorbestimmten Winkel, insbesondere im Bereich von 10 bis 45°, insbesondere 15 bis 35°, von der Hauptachse abweicht, wobei bestimmt wird, ob das Verhältnis des Abstandes der Ebene des Erreichen/Überschreiten eines vorbestimmten Anteils, insbesondere im Bereich von 50 bis 90%, insbesondere 60 bis 85% des mittleren Radius zur Schnittebene einen vorbestimmten Anteil, insbesondere im Bereich von 50 bis 100% der Bearbeitungsbreite des Roboters/Werkzeugs zu einem Zeitpunkt, erreicht oder unterschreitet. In erstem Fall wird vorteilhafterweise ein zylindrischer Körper angenommen.

Mit Vorteil wird die Unterscheidung, ob es sich um ein Regal und/oder Fachwerk handelt, insbesondere in Abgrenzung zu kubisch und/oder zylindrisch, dadurch gefällt, dass bestimmt wird, ob das Verhältnis der/des zusammenhängenden Volumen zwischen der konkaven Hülle und der konvexen Hülle einen vorbestimmten Grenzwert überschreite und/oder dadurch, dass bestimmt wird, ob das Werkstück, die Oberfläche der Werkstück- oder Flächenabschnitt von der konvexen Hülle so abweicht, dass dazwischen zumindest ein zusammenhängendes Volumen liegt, das senkrecht projiziert auf eine Ebene, insbesondere Mittelebene, mehr als ein vorbestimmtes Vielfaches, insbesondere im Bereich von des 1,1 bis 3-Fachen, der Bearbeitungsfläche und/oder quadrierten Bearbeitungsbreite des Roboters/Werkzeugs zu einem Zeitpunkt einnimmt, und/oder und dessen, insbesondere gemittelten, Seitenflächennormalen überwiegend und/oder vollständig um mindestens einen vorbestimmten Wert, insbesondere im Bereich von 35 - 55°, von der Projektionsrichutng , insbesondere Mittelebenennormale abweichen. In diesem Fall wird vorteilhafterweise ein Regal oder Fachwerk angenommen.

Mit Vorteil erfolgt die Abgrenzung zwischen Regal und Fachwerk dadurch, dass das Regal unter den Volumen zwischen konvexer und konkaver Hülle einen Grund aufweist. Dabei wird die Bestimmung des Grundes insbesondere dadurch erreicht, dass ermittelt wird, ob eine Fläche die das zusammenhängende Volumen in Richtung der Mittelebene schließt und deren Normalen weniger als ein vorbestimmter Winkel, insbesondere im Bereich von 35 bis 55° von der Projektionsrichtung, insbesondere Mittelebenennormale abweicht und dessen, insbesondere in Projektionsrichtung projizierte, Fläche größer als ein vorbestimmtes Vielfache, insbesondere im Bereich von des 1,1 bis 3-Fachen, der Bearbeitungsfläche und/oder quadrierten Bearbeitungsbreite des Roboters/Werkzeugs zu einem Zeitpunkt einnimmt. Ist dies der Fall wird vorteilhafterweise ein Regal und kein Fachwerk angenommen.

Mit Vorteil erfolgt die Unterscheidung zwischen geschlossener Fläche und Fläche mit Aussparung dadurch, ob mindestens eine vorbestimmte Anzahl von Löchern und/oder mindestens ein Loch mit einer Größe über einer vorbestimmten Größe vorhanden ist. Dabei ist die vorbestimmte Größe insbesondere gegeben durch eine Grenze für das Verhältnis zwischen, insbesondere auf eine Ebene, insbesondere Mittelebene und/oder, insbesondere gemittelter, Tangentialfläche am Rand des Lochs geteilt durch die maximale Ausdehnung des Loches. Dabei beträgt die Grenze insbesondere einen vorbestimmten Anteil der Bearbeitungsbreite des Roboters/Werkzeugs zu einem Zeitpunkt, insbesondere im Bereich von 20 bis 75%, insbesondere 25 bis 50%. Ist die Grenze überschritten wird vorteilhafterweise eine Fläche bzw. ein Körper mit Aussparung angenommen.

Als ein Zeitpunkt ist insbesondere ein üblicher Zeitpunkt der Bearbeitung zu verstehen und als Bearbeitungsbreite bzw. -fläche insbesondere die, insbesondere üblicherweise, gleichzeitig bearbeitete Breite bzw. Fläche.

Alternativ zur Klassifikation mittels neuronalem Netz können auch die genannten Unterscheidungen zum Labeln der Trainingsdaten direkt zur Klassifikation des Werkstücks/der Hülle genutzt werden.

Die Lackierstrategien können beispielsweise durch Regeln definiert oder durch vorheriges Definieren von Bahnabschnitten und/oder, insbesondere mäandernden, Pfaden, beispielsweise durch manuelles Anlernen, insbesondere pro Klasse der Klassifikation vorbestimmt sein. Solche vorbestimmten Strategien können bei variierenden Größen auch entsprechend der Größenunterschiede angepasst werden.

Mit Vorteil kennzeichnet sich die Lackierstrategie für Flächen durch parallele Bahnabschnitte und/oder mindestens eine, insbesondere eine oder zwei, insbesondere senkrecht und/oder 90° gegen einander gedrehte, mäandernde Bahn(en), und/oder
für Volumenkörper durch eine separate Planung für die, insbesondere ein oder zwei, Stirnflächen und die Seitenfläche(en),wobei bei Aussparungen die Aussparungen insbesondere aus den darüber liegenden Bahnabschnitten ausgespart werden, wobei die Aussparungen insbesondere jeweils einzeln als solche angenommen werden, wenn die jeweils einzeln die oben genannte Bedingung erfüllen. Das Aussparen der Bahnabschnitte erfolgt insbesondere im Bereich der auf die Hülle und/oder Pfadhülle projizierten Aussparung, insbesondere in Richtung der Normalen auf der, insbesondere über den Rand des Lochs gemittelten, Ebene des Lochs, der Hülle und/oder Pfadhülle, insbesondere der Oberfläche und/oder des Werkstücks- und/oder Oberflächenabschnitts.

Als Oberflächenabschnitte werden insbesondere ausschließlich Ebenen, Kugeln, Rotationselypsoide und/oder zylindrische Mantelflächen angenommen. Diese werden insbesondere durch Mittelung der und/oder Fit auf die Hülle und/oder Pfadhülle und/oder durch Mittelung des Werkstücks und/oder Fit auf das Werkstück oder Abschnitte davon ermittelt.

Auch wenn Teile der Bahnabschnitte ausgespart werden, kann es passieren, dass durch Verbinden der Bahnabschnitte eine solche Aussparung wieder rückgängig gemacht wird.

Mit Vorteil bestimmt sich die Lackierstrategie für Flächen durch parallele Bahnabschnitte und/oder mindestens eine, insbesondere eine oder zwei, insbesondere zueinander senkrechte und/oder um 90° gedrehte, mäandernde Bahn(en), auszeichnet, wobei bei Flächen mit Aussparungen die Aussparungen insbesondere aus den darüber liegenden Bahnabschnitten ausgespart werden und/oder
für kubische mit auf Seitenflächen und Stirnseiten jeweils separat mit zueinander parallelen und/oder zur gemittelten jeweiligen Fläche parallelen und/oder geradlinigen Bahnabschnitten, insbesondere mit mindestens einem, insbesondere einem oder zwei, insbesondere zueinander senkrechte und/oder um 90° gedrehte, mäanderförmigen Bahnabschnitten je Seite geplant und/oder
für zylindrische Bahnabschnitte parallel zur Hauptachse auf eine Mantelfläche und/oder senkrecht zur die Hauptachse kreisförmig um das Werkstück gelegt werden und insbesondere mindestens eine, insbesondere zwei, Stirnseite(n) separat mit zueinander parallelen und/oder zur gemittelten Stirnseitenfläche parallelen und/oder geradlinigen Bahnabschnitten, insbesondere einem oder zwei, insbesondere zueinander senkrechte und/oder um 90° gedrehte, mäanderförmigen Bahnabschnitten je Stirnseite geplant werden und/oder
für ein Fachwerk und/oder Regal wie ein kubsicher Körper jedoch mit abweichendem Vorgehen für Bereiche mit zusammenhängendem mindestens eine oben genannte Bedingung erfüllendem Volumen, bzgl. derer Seitenflächen, insbesondere mittels RegionGrowing anhand von Normalen oder anhand von vier Raumrichtungen, insbesondere senkrecht zur Projektionsrichtung, ermittelt und gesondert mit parallelen Bahnabschnitten und/oder mäandernden Bahnen geplant werden, wobei bei Regalen bevorzugt der Grund ebenfalls mit parallelen Bahnabschnitten und/oder mäandernder Bahn geplant wird, bevorzugt kann zudem die, insbesondere umlaufende, Kante zwischen Seitenflächen und Grund gesondert mit einem umlaufenden Bahnabschnitt geplant werden.

Als Stirnseite wird insbesondere eine Schnitteben der Hülle verwendet.

Mit Vorteil wird, insbesondere automatisch, durch die Datenverarbeitungsvorrichtung eine Vielzahl von Bahnabschnitten für eine erste Menge Objektoberfläche, Hüllfläche und/oder Pfadhüllfläche erzeugt und insbesondere zu einer vorläufigen zusammenhängenden Bewegungsbahn zusammengesetzt und wird insbesondere ein realer oder virtueller Roboter genutzt um mittels des Roboters, insbesondere durch Abfahren der Bewegungsbahn durch den Roboter, real oder virtuell zu bearbeiten, insbesondere lackieren, und
für eine zweite, verglichen mit der ersten kleinere Menge Objektoberfläche durch manuelles Anlernen, insbesondere manuelles Steuern eines virtuellen oder realen Roboters oder durch manuelles Zeichnen und/oder Verändern und/oder Ergänzen der automatisch erzeugten zusammenhängenden Bewegungsbahn und/oder Bahnabschnitten, mindestens eine zusammenhängende manuelle Bewegungsbahn erzeugt.

Das Anlernen kann dabei auch ohne Verwendung eines Roboters allein durch Erfassung einer Bewegung, beispielsweise die eines handgeführten Werkzeugs und/oder Erfassungsgeräts erfolgen.

Dabei kann die Bewegung eines manuell gesteuerten Roboters beispielsweise via Tracking, beispielsweise basierend auf optischer Erfassung basierend, kamerabasiert, unter Verwendung von Markern und/oder, unter Verwendung von Inertialsensoren, erfasst werden. Dabei kann die Kamera auch Erfassungsgerät, am Roboter und/oder Werkzeug angebracht werden oder von einer stationären Position aus das Erfassungsgerät, den Roboter und/oder sein/das Werkzeug verfolgen.

Diese zusammenhängende manuelle Bewegungsbahn kann beispielsweise genutzt werden, um die Bewegung des Roboters an bestimmten Stellen zu verändern und/oder die Bearbeitung durch weitere Bearbeitung zu ergänzen.

Die mindestens eine manuelle Bewegungsbahn wird insbesondere verwendet, um die automatischen Bewegungsbahnen zu ergänzen und/oder einen Teil der automatisch erzeugten Bahnabschnitte zu ersetzen, wobei dazu insbesondere

mindestens zwei Anknüpfungspunkte, insbesondere iterativ für jede manuelle Bewegungsbahn und/oder jeden aus einer solchen geteilten Bahnabschnitt, in den automatisch erzeugten Bahnabschnitten und insbesondere im iterativen Vorgehen bereits verarbeiteten manuellen Bewegungsbahnen und/oder aus solchen geteilten Bahnabschnitten, die dazu auch in ihrer Bewegungsrichtung, sofern gegeben, invertiert werden können, insbesondere aus den Anfangs- und Endpunkten der automatisch erzeugten Bahnabschnitte, ausgewählt werden, insbesondere solche, die in Bezug auf Abstand und/oder Richtung (die dazu vorteilhafterweise auch invertiert betrachtet werden kann) und/oder Werkzeugorientierung eine möglichst geringe Abweichung zum Anfang bzw. Ende der zusammenhängenden Bewegungsbahn oder zu einem daraus geteilten manuellen Bewegungsbahnabschnitt aufweisen,
Insbesondere wird ein zusammenhängender Roboterpfad bestimmt, der die nicht ersetzten automatisch erzeugten Bahnabschnitte und die mindestens eine manuell erzeugte Bewegungsbahn beinhaltet und wird insbesondere dieser zusammenhängende Roboterpfad, gegebenenfalls nach weiterer Optimierung wie beispielsweise aus Gleeson bekannt, zur Ansteuerung des/eines, insbesondere realen, Roboters zum realen Lackieren verwendet wird.

Generell wird vorteilhafterweise der Roboterpfad, gegebenenfalls nach weiterer Optimierung, wie beispielsweise aus Gleeson bekannt, insbesondere wiederholt, zur Ansteuerung eines Roboters zur Bearbeitung des/jeweils eines Werkstücks verwendet.

Mit Vorteil beinhaltet das Verfahren die drei Schritte Klassifikation, Strategiefindung und Pfaderzeugung.

Mit Vorteil erfolgt zur Bestimmung der Verbindungen von Bahnabschnitten zu einem Roboterpfad mindestens eine Bestimmung, insbesondere eine Vielzahl von Bestimmungen, von Taktzeitabschätzungen und/oder, insbesondere Zeit-, Aufwänden für mögliche Verbindungen, und werden mittels Vergleich der Aufwände und/oder Taktzeitabschätzungen Verbindungen ausgewählt werden, die eine(n) möglichst geringe(n) Taktzeit/Aufwand für den dadurch entstehenden Roboterpfad aufweisen, wobei die Taktzeit bzw. der Aufwand sich insbesondere durch die Eigenschaften des Roboters, insbesondere inklusiv des darin beinhalteten Werkzeugs, bestimmt und insbesondere Zeiten für Translation und Rotation des Roboters, insbesondere des Werkzeugs, beispielsweise Lackierpistole und/oder Schleifmittel und/oder Schleifmittelträger beinhaltet, beispielsweise mittels Simulation der Bewegung des Roboters und/oder Algorithmen aus der Graphentheorie, wie Traveling Salesman Algorithmus.

Mit Vorteil wird ein Roboterpfad, mindestens ein Bahnabschnitt und/oder die mindestens eine manuell erzeugte Bewegungsbahn und/oder mindestens ein daraus geteilter Bahnabschnitt dadurch optimiert, dass ihr/sein Abstand zur Hülle, und/oder zum Werkstück über ihren/seinen Verlauf konstant gehalten wird, insbesondere gemittelt wird, und/oder der Verlauf relativ zu Kanten des Werkstücks und/oder der Hülle und/oder Pfadhülle und/oder anderen Bahnabschnitten parallelisiert wird, insbesondere durch Festlegen eines, insbesondere aus Mittelung gewonnen, konstanten Abstandes und/oder die Ausrichtung des Werkzeugs, insbesondere der Sprühpistole des Roboters, optimiert und/oder vereinheitlicht wird, insbesondere im Verhältnis zur Ausrichtung zur Normalen der Hülle und/oder Pfadhülle und oder Oberfläche und/oder Oberflächenabschnitt und/oder gemittelt wird, insbesondere mittels Reinforcement Learning und/oder Simulated Annealing und/oder andere stochastische Optimierungsverfahren, wobei insbesondere eine Reward-Funktion verwendet wird, die insbesondere zuvor genannte Eigenschaften berücksichtigt und/oder einen vorgenannten Abstand und/oder eine vorgenannte Orientierung konstant zu halten belohnt und/oder, insbesondere größere, Abweichungen (z.B. bestimmt mittels Chamfer Distance) von der manuell erstellten Bewegungsbahn, den automatisch erzeugten Bahnabschnitten und/oder dem erzeugten Roboterpfad bestraft und/oder wobei die Reward-Funktion verbessert und/oder erlernt wird, basierend auf einer Wissensdatenbank von Roboterpfaden für die Bearbeitung einer Vielzahl von Werkstücken.

Nachfolgend wird rein exemplarisch und nicht beschränkend eine Behandlung/Charakterisierung eines zylindrischen Körpers anhand der rein examplarischen Figuren beschrieben.

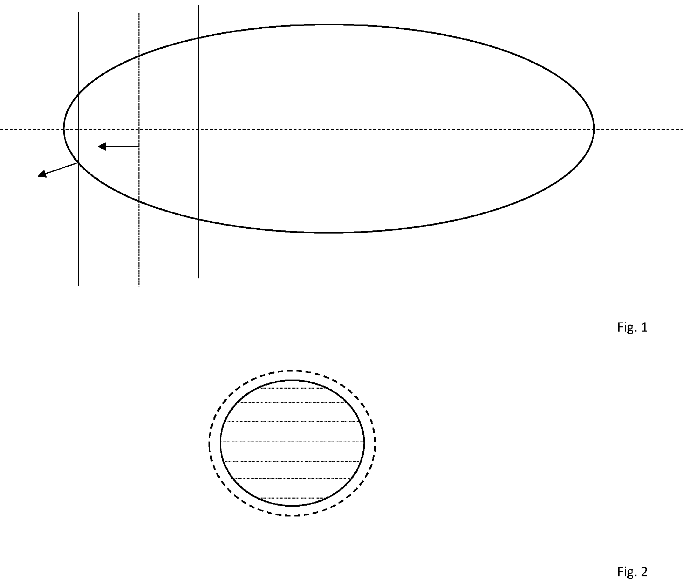

Fig. 1 zeigt eine seitliche Projektion einer Hülle eines zylindrischen Körpers mit der von links nach rechts verlaufenden und über die Hülle verlängerten Hauptachse. Als durchgezogene Linie ist die Schnittebene des mittleren Durchmessers senkrecht zur Hauptachse eingezeichnet sowie die normale darauf als Pfeil. Links davon gestrichelt ist die Schnittebene senkrecht zur Hauptachse gezeigt, bei der die Normale an der Schnittlinie der Hülle mit dieser Schnittebene im Mittel um 20° von der Hauptachse abweicht. Exemplarisch ist als Pfeil eine Normale eingezeichnet. Recht davon ist als gestrichelte Linie die Schnittebene mit Schnittlinie mit der Hülle von gemittelt 75% des maximalen Umfangs gezeigt. Der Abstand der gestrichelten Linien kann als Maß für die Unterscheidung zwischen zylindrischen und kubischen Körpern genutzt werden.

Fig. 2 zeigt eine Ansicht auf eine Stirnseite mit darauf punktiert gezeichneten Bahnabschnitten und darum eine gestrichelte Linie die den Verlauf der Bahnabschnitte zur Bearbeitung der Mantelfläche veranschaulicht.

## Patentansprüche

1. Verfahren zur Bearbeitung, insbesondere Lackieren, einer Mehrzahl formgleicher Werkstücke,
wobei in einem ersten Schritt mittels eines digitalen Modells der oder eines ersten Scans der Werkstücke ein Roboterpfad erstellt wird, wobei dies insbesondere derart erfolgt, dass ein erstes der Mehrzahl der Werkstücke mittels mindestens einer Auflage und/oder Aufnahme positioniert wird und mittels eines 3D-Scanners eine Punktewolke einer Außenkontur des ersten Werkstücks erstellt wird, wobei eine konvexe und/oder konkave Hülle der Punktewolke ermittelt wird und wobei unter Verwendung der Hülle mindestens ein Roboterpfad erstellt wird und
wobei in einem zweiten Schritt ein, insbesondere zweites, Werkstück der Mehrzahl der Werkstücke mittels mindestens einer Auflage und/oder Aufnahme positioniert wird und mittels eines oder des 3D-Scanners eine Punktewolke einer Außenkontur des zweiten Werkstücks erstellt wird,
wobei die Lage und Orientierung des digitalen Modells, insbesondere die Punktewolken des ersten Werkstücks und die Punktewolke des, insbesondere zweiten, Werkstücks verglichen werden, um einen translativen und/oder rotativen Lageunterschied des Werkstücks und/oder mindestens einer seiner Oberflächen, Werkstück- und/oder Oberflächenabschnitte zu ermitteln und der Roboterpfad um den Lageunterschied transformiert wird
und mittels mindestens eines Roboters zur Bearbeitung des zweiten Werkstücks der transformierte Roboterpfad abgefahren wird.

2. Verfahren nach Anspruch 1, wobei der der zweite Schritt mit weiteren Werkstücken der Mehrzahl wiederholt wird.

3. Verfahren nach einem der vorstehenden Ansprüche, wobei die Hülle mittels Delaunay Triangulation und/oder mittels 3d Alpha Wrapping ermittelt wird.

4. Verfahren nach einem der vorstehenden Ansprüche, wobei die Roboterbahn als Bahnabschnitte, die miteinander verbunden werden erzeugt wird, wobei die Bahnabschnitte als in zwei Richtungen gerade Linien auf eine Pfadhülle mit vorbestimmtem Abstand von der Hülle gelegt werden.

5. Verfahren nach einem der vorstehenden Ansprüche, wobei der Roboterpfad durch Verbinden einer Vielzahl von Bahnabschnitten erstellt wird.

6. Verfahren nach einem der vorstehenden Ansprüche, wobei die Bahnabschnitte mittels Ablegen und/oder Abbiegen von, insbesondere je zu planender Fläche parallelen, Strahlen auf die Hülle erfolgt, insbesondere in Richtung der, insbesondere gemittelten, Normalen der Hülle.

7. Verfahren nach einem der vorstehenden Ansprüche, wobei die Auswahl einer Strahlquelle, der Strahlenrichtung und/oder des Strahlenabstand oder der Strategie zur Erzeugung von Bahnabschnitten abhängig ist von einer gewählten Lackierstrategie.

8. Verfahren zur Bearbeitung, insbesondere Lackieren, mindestens eines Werkstücks, insbesondere nach einem der vorstehenden Ansprüche, wobei das Werkstück und/oder mindestens ein Werkstück- und/oder Oberflächenabschnitt mittels neuronalem Netz, insbesondere unter Verwendung von PointNet und/oder PointNet+ +, insbesondere punktbasiert, klassifiziert wird und anhand der Klassifikation eine vorbestimmte Lackierstrategie pro Werkstück- und/oder Oberflächenabschnitt gewählt und zur Erzeugung der Roboterbahn, insbesondere von Bahnabschnitten zur Erzeugung der Roboterbahn, verwendet wird, wobei die Klassifikation zumindest unterscheidet zwischen einerseits flächigen Körpern und Volumenkörpern und andererseits zwischen geschlossen oder solchen mit Aussparungen, insbesondere unterscheidet zwischen geschlossenen Flächen, Flächen mit Aussparungen, kubischen, zylindrischen, regalförmigen Körpern und/oder Fachwerkkörpern, wobei insbesondere eine Konsolidierung der punktbasierten Klassifikation derart erfolgt, dass insbesondere mittels Segmentierung, insbesondere regionbasiert und/oder mittels clustering, Werkstück- und/oder Oberflächenabschnitte mit einer Mindestgröße des Bearbeitungsradius der gleichzeitigen Bearbeitung des Roboters, beispielsweise Sprühradius und/oder Schleifradius, erfolgt.

9. Verfahren nach einem der vorstehenden Ansprüche, wobei das neuronale Netz ein solches ist, das unter Verwendung von gelabelten Daten trainiert wurde und/oder wobei das neuronale Netz an gelabelten Daten trainiert wird und die Unterscheidung zwischen flächiger Körper oder Volumenkörper zum Labeln der Daten anhand einer vorbestimmten Grenze des Volumen/Flächen-Verhältnis erfolgt und/oder
zwischen kubisch und zylindrisch anhand eines vorbestimmten Wertes für die akkumulierte Differenz vom mittleren Radius zum realen Radius im Verhältnis zum Radius, wobei der Radius ein solcher um die Hauptachse ist und/oder wobei die Unterscheidung und/oder wobei sich Regal und/oder Fachwerk dadurch kennzeichnen, dass das Verhältnis der zusammenhängenden Volumen zwischen der konkaven Hülle und der konvexen Hülle einen vorbestimmten Grenzwert überschreite und/oder
wobei sich Regal und Fachwerk dadurch unterscheiden, dass das Regal unter den Volumen zwischen konvexer und konkaver Hülle einen Grund aufweist und/oder
die Unterscheidung zwischen geschlossener Fläche und Fläche mit Aussparung dadurch gegeben ist, ob mindestens ein Loch mit einer Größe über einer vorbestimmten Größe vorhanden ist.

10. Verfahren nach einem der vorstehenden Ansprüche, wobei sich die Lackierstrategie für Flächen durch parallele Bahnabschnitte und/oder mindestens eine, insbesondere eine oder zwei, mäandernde Bahn(en), auszeichnet und/oder
für Volumenkörper durch eine separate Planung für die, insbesondere ein oder zwei, Stirnflächen und die Seitenfläche(en) auszeichnet,
wobei bei Aussparungen die Aussparungen insbesondere aus den darüber liegenden Bahnabschnitten ausgespart werden.

11. Verfahren nach einem der vorstehenden Ansprüche, wobei sich die Lackierstrategie für Flächen durch parallele Bahnabschnitte und/oder mindestens eine, insbesondere eine oder zwei, mäandernde Bahn(en), auszeichnet, wobei bei Flächen mit Aussparungen die Aussparungen insbesondere aus den darüber liegenden Bahnabschnitten ausgespart werden und/oder
für kubische mit auf Seitenflächen und Stirnseiten jeweils separat mit zueinander parallelen und/oder zur gemittelten jeweiligen Fläche parallelen und/oder geradlinigen Bahnabschnitten, insbesondere mit mindestens einem, insbesondere einem oder zwei mäanderförmigen Bahnabschnitten je Seite geplant und/oder
für zylindrische werden Bahnabschnitte parallel zur Hauptachse auf eine Mantelfläche und/oder senkrecht zur die Hauptachse kreisförmig um das Werkstück gelegt und insbesondere eine Stirnseite separat mit zueinander parallelen und/oder zur gemittelten Stirnseitenfläche parallelen und/oder geradlinigen Bahnabschnitten geplant und/oder
für ein Fachwerk und/oder Regal wie ein kubsicher Körper jedoch mit abweichendem Vorgehen für die Bereiche mit Volumen zwischen der konkaven Hülle und der konvexen Hülle über einem vorbestimmten Grenzwert werden Seifenflächen, insbesondere mittels RegionGrowing anhand der Normalen oder vier Raumrichtungen ermittelt und gesondert mit parallelen Bahnabschnitten und/oder mäandernden Bahnen vorgesehen, wobei bei Regalen bevorzugt der Grund ebenfalls mit parallelen Bahnabschnitten und/oder mäandernder Bahn geplant wird, bevorzugt kann zudem die, insbesondere umlaufende, Kante zwischen Seitenflächen und Grund gesondert mit einem umlaufenden Bahnabschnitt geplant werden.

12. Verfahren nach einem der vorstehenden Ansprüche, wobei, insbesondere automatisch, durch eine Datenverarbeitungsvorrichtung eine Vielzahl von Bahnabschnitten für eine erste Menge Objektoberfläche erzeugt und insbesondere zu einer vorläufigen zusammenhängenden Bewegungsbahn zusammengesetzt werden und insbesondere ein realer oder virtueller Roboter genutzt wird um mittels des Roboters real oder virtuell zu lackieren und
für eine zweite, verglichen mit der ersten kleinere Menge Objektoberfläche durch manuelles Steuern eines virtuellen oder realen Roboters oder durch manuelles Zeichnen mindestens eine zusammenhängende manuelle Bewegungsbahn erzeugt wird und
die mindestens eine manuellen Bewegungsbahn verwendet wird, um die automatischen Bewegungsbahnen zu ergänzen und/oder einen Teil der automatisch erzeugten Bahnabschnitten zu ersetzen, wobei dazu
mindestens zwei Anknüpfungspunkte in den automatisch erzeugten Bahnabschnitten, insbesondere aus den Anfangs- und Endpunkten der automatisch erzeugten Bahnabschnitte, ausgewählt werden, insbesondere solche, die in Bezug auf Abstand und/oder Richtung eine möglichst geringe Abweichung zum Anfang bzw. Ende der zusammenhängenden Bewegungsbahn oder zu einem daraus geteilten manuellen Bewegungsbahnabschnitt aufweisen, und
ein zusammenhängender Roboterpfad bestimmt wird, der die nicht ersetzten automatisch erzeugten Bahnabschnitte und die mindestens eine manuell erzeugte Bewegungsbahn beinhaltet und insbesondere diese zusammenhängende Bewegungsbahn zur Ansteuerung des Roboters zum realen Lackieren verwendet wird.

13. Verfahren nach einem der vorstehenden Ansprüche, wobei der Roboterpfad, gegebenenfalls nach weiterer Optimierung, zur Ansteuerung eines Roboters zur Bearbeitung des Werkstücks verwendet wird und/oder wobei das Verfahren die drei Schritte Klassifikation, Strategiefindung und Pfaderzeugung beinhaltet.

14. Verfahren, wobei zur Bestimmung der Verbindungen von Bahnabschnitten zu einem Roboterpfad eine Bestimmung von Taktzeitabschätzung und/oder, insbesondere Zeit-, Aufwänden für mögliche Verbindungen erfolgt, und mittels Vergleich der Aufwände Verbindungen ausgewählt werden, die eine(n) möglichst geringe(n) Taktzeit/Aufwand aufweisen, wobei die Taktzeit bzw. der Aufwand sich insbesondere durch die Eigenschaften des Roboters, inklusiv des darin beinhalteten Werkzeugs, bestimmt und insbesondere Zeiten für Translation und Rotation des Roboters, insbesondere des Werkzeugs, beispielsweise Lackierpistole und/oder Schleifmittel beinhaltet, beispielsweise mittels Simulation und/oder Algorithmen aus der Graphentheorie, wie Traveling Salesman Algorithmus.

15. Verfahren nach einem der vorstehenden Ansprüche, wobei die mindestens eine manuell erzeugte Bewegungsbahn und/oder mindestens eines daraus geteilten Bahnabschnittes dadurch optimiert wird, dass ihr/sein Abstand zur Hülle über ihren/seinen Verlauf konstant gehalten wird, insbesondere gemittelt wird, und/oder der Verlauf zu Kanten des Werkstücks parallelisiert wird, insbesondere durch Festlegen eines aus Mittelung gewonnen konstanten Abstandes und/oder die Ausrichtung des Werkzeugs, insbesondere der Sprühpistole des Roboters, optimiert und/oder vereinheitlicht wird, insbesondere im Verhältnis zur Ausrichtung zur Normalen der Hülle und/oder gemittelt wird, insbesondere mittels Reinforcement Learning und/oder Simulated Annealing, wobei insbesondere eine Reward-Funktion verwendet wird, die insbesondere zuvor genannte Eigenschaften berücksichtigt und/oder den Abstand und/oder die Orientierung zur Oberfläche konstant zu halten belohnt und/oder, insbesondere größere, Abweichungen (e.g. Chamfer Distance) von der manuell erstellten Bewegungsbahn bestraft und/oder wobei die Reward-Funktion durch verbessert und/oder erlernt wird, basierend auf eine Wissensdatenbank von Roboterpfaden für die Bearbeitung einer Vielzahl von Werkstücken.

## Geänderte Patentansprüche

### Geänderte Patentansprüche gemäss Regel 137(2) EPÜ.

1. Verfahren zur Bearbeitung, insbesondere Lackieren, mindestens eines Werkstücks, , wobei Oberflächenabschnitte des Werkstücks mittels neuronalem Netz, insbesondere unter Verwendung von PointNet und/oder PointNet + +, insbesondere punktbasiert, klassifiziert werden und anhand der Klassifikation eine vorbestimmte Lackierstrategie pro Oberflächenabschnitt gewählt und zur Erzeugung der Roboterbahn, insbesondere von Bahnabschnitten zur Erzeugung der Roboterbahn, verwendet wird,
wobei die Klassifikation zumindest unterscheidet zwischen einerseits flächigen Körpern und Volumenkörpern und andererseits zwischen geschlossen oder solchen mit Aussparungen, insbesondere unterscheidet zwischen geschlossenen Flächen, Flächen mit Aussparungen, kubischen, zylindrischen, regalförmigen Körpern und/oder Fachwerkkörpern, wobei insbesondere eine Konsolidierung der punktbasierten Klassifikation derart erfolgt, dass insbesondere mittels Segmentierung, insbesondere regionbasiert und/oder mittels clustering, Oberflächenabschnitte mit einer Mindestgröße des Bearbeitungsradius der gleichzeitigen Bearbeitung des Roboters, beispielsweise Sprühradius und/oder Schleifradius, erfolgt.

2. Verfahren nach Anspruch1zur Bearbeitung einer Mehrzahl formgleicher Werkstücke,
wobei in einem ersten Schritt mittels eines digitalen Modells der oder eines ersten Scans der Werkstücke ein Roboterpfad erstellt wird, wobei dies insbesondere derart erfolgt, dass ein erstes der Mehrzahl der Werkstücke mittels mindestens einer Auflage und/oder Aufnahme positioniert wird und mittels eines 3D-Scanners eine Punktewolke einer Außenkontur des ersten Werkstücks erstellt wird, wobei eine konvexe und/oder konkave Hülle der Punktewolke ermittelt wird und wobei unter Verwendung der Hülle mindestens ein Roboterpfad erstellt wird und
wobei in einem zweiten Schritt ein, insbesondere zweites, Werkstück der Mehrzahl der Werkstücke mittels mindestens einer Auflage und/oder Aufnahme positioniert wird und mittels eines oder des 3D-Scanners eine Punktewolke einer Außenkontur des zweiten Werkstücks erstellt wird,
wobei die Lage und Orientierung des digitalen Modells, insbesondere die Punktewolken des ersten Werkstücks und die Punktewolke des, insbesondere zweiten, Werkstücks verglichen werden, um einen translativen und/oder rotativen Lageunterschied des Werkstücks und/oder mindestens einer seiner Oberflächen, Werkstück- und/oder Oberflächenabschnitte zu ermitteln und der Roboterpfad um den Lageunterschied transformiert wird
und mittels mindestens eines Roboters zur Bearbeitung des zweiten Werkstücks der transformierte Roboterpfad abgefahren wird.

3. Verfahren nach einem der vorstehenden Ansprüche, wobei der der zweite Schritt mit weiteren Werkstücken der Mehrzahl wiederholt wird.

4. Verfahren nach einem der vorstehenden Ansprüche, wobei die Hülle mittels Delaunay Triangulation und/oder mittels 3d Alpha Wrapping ermittelt wird.

5. Verfahren nach einem der vorstehenden Ansprüche, wobei die Roboterbahn als Bahnabschnitte, die miteinander verbunden werden erzeugt wird, wobei die Bahnabschnitte als in zwei Richtungen gerade Linien auf eine Pfadhülle mit vorbestimmtem Abstand von der Hülle gelegt werden.

6. Verfahren nach einem der vorstehenden Ansprüche, wobei der Roboterpfad durch Verbinden einer Vielzahl von Bahnabschnitten erstellt wird.

7. Verfahren nach einem der vorstehenden Ansprüche, wobei die Bahnabschnitte mittels Ablegen und/oder Abbiegen von, insbesondere je zu planender Fläche parallelen, Strahlen auf die Hülle erfolgt, insbesondere in Richtung der, insbesondere gemittelten, Normalen der Hülle.

8. Verfahren nach einem der vorstehenden Ansprüche, wobei die Auswahl einer Strahlquelle, der Strahlenrichtung und/oder des Strahlenabstand oder der Strategie zur Erzeugung von Bahnabschnitten abhängig ist von einer gewählten Lackierstrategie.

9. Verfahren nach einem der vorstehenden Ansprüche, wobei das neuronale Netz ein solches ist, das unter Verwendung von gelabelten Daten trainiert wurde und/oder
wobei das neuronale Netz an gelabelten Daten trainiert wird und die Unterscheidung zwischen flächiger Körper oder Volumenkörper zum Labeln der Daten anhand einer vorbestimmten Grenze des Volumen/Flächen-Verhältnis erfolgt und/oder
zwischen kubisch und zylindrisch anhand eines vorbestimmten Wertes für die akkumulierte Differenz vom mittleren Radius zum realen Radius im Verhältnis zum Radius, wobei der Radius ein solcher um die Hauptachse ist und/oder wobei die Unterscheidung und/oder wobei sich Regal und/oder Fachwerk dadurch kennzeichnen, dass das Verhältnis der zusammenhängenden Volumen zwischen der konkaven Hülle und der konvexen Hülle einen vorbestimmten Grenzwert überschreite und/oder
wobei sich Regal und Fachwerk dadurch unterscheiden, dass das Regal unter den Volumen zwischen konvexer und konkaver Hülle einen Grund aufweist und/oder
die Unterscheidung zwischen geschlossener Fläche und Fläche mit Aussparung dadurch gegeben ist, ob mindestens ein Loch mit einer Größe über einer vorbestimmten Größe vorhanden ist.

10. Verfahren nach einem der vorstehenden Ansprüche, wobei sich die Lackierstrategie für Flächen durch parallele Bahnabschnitte und/oder mindestens eine, insbesondere eine oder zwei, mäandernde Bahn(en), auszeichnet und/oder
für Volumenkörper durch eine separate Planung für die, insbesondere ein oder zwei, Stirnflächen und die Seitenfläche(en) auszeichnet,
wobei bei Aussparungen die Aussparungen insbesondere aus den darüber liegenden Bahnabschnitten ausgespart werden.

11. Verfahren nach einem der vorstehenden Ansprüche, wobei sich die Lackierstrategie für Flächen durch parallele Bahnabschnitte und/oder mindestens eine, insbesondere eine oder zwei, mäandernde Bahn(en), auszeichnet, wobei bei Flächen mit Aussparungen die Aussparungen insbesondere aus den darüber liegenden Bahnabschnitten ausgespart werden und/oder
für kubische mit auf Seitenflächen und Stirnseiten jeweils separat mit zueinander parallelen und/oder zur gemittelten jeweiligen Fläche parallelen und/oder geradlinigen Bahnabschnitten, insbesondere mit mindestens einem, insbesondere einem oder zwei mäanderförmigen Bahnabschnitten je Seite geplant und/oder
für zylindrische werden Bahnabschnitte parallel zur Hauptachse auf eine Mantelfläche und/oder senkrecht zur die Hauptachse kreisförmig um das Werkstück gelegt und insbesondere eine Stirnseite separat mit zueinander parallelen und/oder zur gemittelten Stirnseitenfläche parallelen und/oder geradlinigen Bahnabschnitten geplant und/oder
für ein Fachwerk und/oder Regal wie ein kubsicher Körper jedoch mit abweichendem Vorgehen für die Bereiche mit Volumen zwischen der konkaven Hülle und der konvexen Hülle über einem vorbestimmten Grenzwert werden Seifenflächen, insbesondere mittels RegionGrowing anhand der Normalen oder vier Raumrichtungen ermittelt und gesondert mit parallelen Bahnabschnitten und/oder mäandernden Bahnen vorgesehen, wobei bei Regalen bevorzugt der Grund ebenfalls mit parallelen Bahnabschnitten und/oder mäandernder Bahn geplant wird, bevorzugt kann zudem die, insbesondere umlaufende, Kante zwischen Seitenflächen und Grund gesondert mit einem umlaufenden Bahnabschnitt geplant werden.

12. Verfahren nach einem der vorstehenden Ansprüche, wobei, insbesondere automatisch, durch eine Datenverarbeitungsvorrichtung eine Vielzahl von Bahnabschnitten für eine erste Menge Objektoberfläche erzeugt und insbesondere zu einer vorläufigen zusammenhängenden Bewegungsbahn zusammengesetzt werden und insbesondere ein realer oder virtueller Roboter genutzt wird um mittels des Roboters real oder virtuell zu lackieren und
für eine zweite, verglichen mit der ersten kleinere Menge Objektoberfläche durch manuelles Steuern eines virtuellen oder realen Roboters oder durch manuelles Zeichnen mindestens eine zusammenhängende manuelle Bewegungsbahn erzeugt wird und
die mindestens eine manuellen Bewegungsbahn verwendet wird, um die automatischen Bewegungsbahnen zu ergänzen und/oder einen Teil der automatisch erzeugten Bahnabschnitten zu ersetzen, wobei dazu
mindestens zwei Anknüpfungspunkte in den automatisch erzeugten Bahnabschnitten, insbesondere aus den Anfangs- und Endpunkten der automatisch erzeugten Bahnabschnitte, ausgewählt werden, insbesondere solche, die in Bezug auf Abstand und/oder Richtung eine möglichst geringe Abweichung zum Anfang bzw. Ende der zusammenhängenden Bewegungsbahn oder zu einem daraus geteilten manuellen Bewegungsbahnabschnitt aufweisen, und
ein zusammenhängender Roboterpfad bestimmt wird, der die nicht ersetzten automatisch erzeugten Bahnabschnitte und die mindestens eine manuell erzeugte Bewegungsbahn beinhaltet und insbesondere diese zusammenhängende Bewegungsbahn zur Ansteuerung des Roboters zum realen Lackieren verwendet wird.

13. Verfahren nach einem der vorstehenden Ansprüche, wobei der Roboterpfad, gegebenenfalls nach weiterer Optimierung, zur Ansteuerung eines Roboters zur Bearbeitung des Werkstücks verwendet wird und/oder wobei das Verfahren die drei Schritte Klassifikation, Strategiefindung und Pfaderzeugung beinhaltet.

14. Verfahren, wobei zur Bestimmung der Verbindungen von Bahnabschnitten zu einem Roboterpfad eine Bestimmung von Taktzeitabschätzung und/oder, insbesondere Zeit- , Aufwänden für mögliche Verbindungen erfolgt, und mittels Vergleich der Aufwände Verbindungen ausgewählt werden, die eine(n) möglichst geringe(n) Taktzeit/Aufwand aufweisen, wobei die Taktzeit bzw. der Aufwand sich insbesondere durch die Eigenschaften des Roboters, inklusiv des darin beinhalteten Werkzeugs, bestimmt und insbesondere Zeiten für Translation und Rotation des Roboters, insbesondere des Werkzeugs, beispielsweise Lackierpistole und/oder Schleifmittel beinhaltet, beispielsweise mittels Simulation und/oder Algorithmen aus der Graphentheorie, wie Traveling Salesman Algorithmus.

15. Verfahren nach einem der vorstehenden Ansprüche, wobei die mindestens eine manuell erzeugte Bewegungsbahn und/oder mindestens eines daraus geteilten Bahnabschnittes dadurch optimiert wird, dass ihr/sein Abstand zur Hülle über ihren/seinen Verlauf konstant gehalten wird, insbesondere gemittelt wird, und/oder der Verlauf zu Kanten des Werkstücks parallelisiert wird, insbesondere durch Festlegen eines aus Mittelung gewonnen konstanten Abstandes und/oder die Ausrichtung des Werkzeugs, insbesondere der Sprühpistole des Roboters, optimiert und/oder vereinheitlicht wird, insbesondere im Verhältnis zur Ausrichtung zur Normalen der Hülle und/oder gemittelt wird, insbesondere mittels Reinforcement Learning und/oder Simulated Annealing, wobei insbesondere eine Reward-Funktion verwendet wird, die insbesondere zuvor genannte Eigenschaften berücksichtigt und/oder den Abstand und/oder die Orientierung zur Oberfläche konstant zu halten belohnt und/oder, insbesondere größere, Abweichungen (e.g. Chamfer Distance) von der manuell erstellten Bewegungsbahn bestraft und/oder wobei die Reward-Funktion durch verbessert und/oder erlernt wird, basierend auf eine Wissensdatenbank von Roboterpfaden für die Bearbeitung einer Vielzahl von Werkstücken.
